# FASCICULE DE BREVET EUROPEEN

(11) **EP 2 516 196 B1**
(45) Date de publication et mention de la délivrance du brevet: **09.01.2019**
(21) Numéro de dépôt: 10813102.0
(22) Date de dépôt: 21.12.2010
(51) Int. Cl.: B60K 37/06, G06F 3/048

(54) **DISPOSITIF DE COMMANDE POUR VÉHICULE AUTOMOBILE**
STEUERVORRICHTUNG FÜR EIN KRAFTFAHRZEUG
CONTROL DEVICE FOR A MOTOR VEHICLE

(30) Priorité: 22.12.2009 FR 0906250
(43) Date de publication de la demande: 31.10.2012
(73) Titulaire: DAV, 94046 Creteil Cedex (FR)
(72) Inventeur: TISSOT, Jean-Marc, F-74250 Viuz en Sallaz (FR)
(86) Numéro de dépôt international: PCT/FR2010/000859
(87) Numéro de publication internationale: WO 2011/083212

(56) Documents cités:
- EP-A1- 1 702 805
- EP-A2- 2 075 542
- WO-A1-03/058359
- DE-B3- 10 302 924
- US-A1- 2006 256 082
- US-A1- 2007 176 797
- US-A1- 2008 129 684

## Description

L'invention concerne un dispositif de commande embarqué dans un véhicule automobile.

Actuellement, les véhicules automobiles sont équipés de plus en plus avec des systèmes électroniques d'assistance et de confort pour le conducteur et ses passagers, par exemple des systèmes de climatisation, de navigation, d'accès Internet, de téléphonie, radio ou encore audio.

La document US2007/176797 A divulgue un dispositif selon le préambule de la revendication 1.

Ces fonctions peuvent être commandées par l'intermédiaire d'un dispositif de commande par exemple disposée au niveau de la console centrale, entre les deux sièges avant du véhicule automobile.

Pour augmenter le confort ergonomique, on utilise de plus en plus une surface de commande tactile permettant de détecter un geste d'un utilisateur tel que le conducteur et, en fonction de la position et du déplacement sur la surface tactile, de déclencher une commande.

En effet, les surface tactiles, en particulier pour le domaine automobile, ont fait des progrès importants. On peut citer en exemple une technologie utilisant des résistances sensibles à la pression (également connu sous le nom capteur FSR pour « Force Sensing Resistor »), une technologie capacitive ou encore optique.

Cependant, selon les situations et les tâches de conduite, le conducteur n'est pas à même de commander le dispositif par un geste appliqué en toutes circonstances. De plus, cela demande un effort de concentration au conducteur qui détourne son attention de sa tâche principale de conduite avec des conséquences sur la sécurité.

L'invention a donc pour objectif de pallier cet inconvénient de l'art antérieur en permettant à l'utilisateur une meilleure utilisation du dispositif de commande pendant la conduite.

À cet effet, l'invention a pour objet un dispositif de commande pour véhicule automobile, comprenant une surface tactile de commande configurée pour détecter un geste d'un utilisateur exercé sur ladite surface tactile, et une unité d'interprétation dudit geste détecté pour générer une commande associée audit geste détecté, caractérisé en ce que ledit dispositif de commande comporte au moins une unité de traitement configurée pour alterner le mode de fonctionnement dudit dispositif de commande entre un mode de fonctionnement appliqué, et un mode de fonctionnement rudimentaire, en fonction d'un paramètre d'entrée pour alterner le mode de fonctionnement.

L'alternance entre un mode appliqué et un mode rudimentaire permet d'adapter l'utilisation du dispositif de commande à la conduite de façon à éviter que le conducteur ne se focalise sur le dispositif de commande durant la manipulation en risquant de perdre l'attention sur la conduite.

Ledit dispositif de commande peut en outre comporter une ou plusieurs caractéristiques suivantes, prises séparément ou en combinaison :
- l'unité d'affichage est configurée pour adapter l'affichage selon le mode de fonctionnement appliqué ou rudimentaire,
- l'affichage du mode de fonctionnement rudimentaire comporte une représentation graphique de zones fonctionnelles agrandies par rapport à l'affichage du mode de fonctionnement appliqué,
- l'unité d'affichage comporte un écran d'affichage et ladite surface tactile est intégrée à l'écran d'affichage,
- ladite surface tactile est dissociée de l'unité d'affichage,
- l'unité d'interprétation est configurée pour changer la base de données d'interprétation de gestes de l'unité d'interprétation selon le mode de fonctionnement appliqué ou rudimentaire,
- en mode de fonctionnement rudimentaire, un geste de trajectoire rudimentaire est associé à une commande de sélection indépendamment de la longueur de déplacement du geste sur ladite surface tactile,
- la commande de sélection est une commande de déplacement dans un menu déroulant avec un pas d'incrémentation (par exemple supérieur/inférieur, avant/arrière, gauche /droite, etc...) prédéterminé,
- en mode de fonctionnement rudimentaire, un geste d'appui exercé sur ladite surface tactile selon une durée prédéfinie est associé à une commande de validation,
- ledit dispositif de commande comporte au moins un moyen de sélection manuelle pour alterner le mode de fonctionnement dudit dispositif de commande, dont l'activation génère un paramètre d'entrée de l'unité de traitement pour alterner le mode de fonctionnement,
- le paramètre d'entrée pour alterner le mode de fonctionnement est choisi parmi le groupe comprenant un paramètre d'état dynamique du véhicule, un paramètre de classification du geste exercé sur ladite surface tactile en tant que geste appliqué ou geste rudimentaire, un paramètre sur l'utilisateur dudit dispositif de commande,
- l'unité de traitement (9) est configurée pour enclencher le mode de fonctionnement rudimentaire lorsque, le paramètre d'état dynamique du véhicule étant la vitesse détectée, ladite vitesse est supérieure à un seuil de vitesse prédéfini, et pour enclencher le mode de fonctionnement appliqué lorsque la vitesse détectée est inférieure audit seuil,
- l'unité de traitement est configurée pour enclencher le mode de fonctionnement rudimentaire, si un geste détecté sur ladite surface tactile est exercé par le conducteur,
- l'unité de traitement est configurée pour enclencher le mode de fonctionnement appliqué, si un geste détecté sur ladite surface tactile est classé comme un geste appliqué, et pour enclencher le mode de fonctionnement rudimentaire, si ledit geste détecté est classé comme un geste rudimentaire,
- ledit dispositif de commande comporte un module de classification relié à une entrée de l'unité de traitement et configuré pour comparer un geste détecté sur ladite surface tactile avec une pluralité de critères enregistrés respectivement associés à un geste appliqué et/ou à un geste rudimentaire, et pour classer ledit geste détecté comme un geste appliqué ou comme un geste rudimentaire selon les résultats de comparaison,
- au moins un critère enregistré associé à un geste appliqué est choisi parmi les critères suivants : un critère d'appui unique exercé sur ladite surface tactile, un critère de constance de pression exercée sur ladite surface tactile, un critère multi-directionnel du geste exercé sur ladite surface tactile, un critère d'accélération du geste exercé sur ladite surface tactile inférieure à un seuil d'accélération prédéfini,
- au moins un critère enregistré associé à un geste rudimentaire est choisi parmi les critères suivants : un critère d'appuis multiples exercés sur ladite surface tactile selon un sens unique, un critère de non-constance de pression exercée sur ladite surface tactile, un critère d'accélération du geste exercé sur ladite surface tactile supérieure à un seuil d'accélération prédéfini,
- ladite surface tactile comporte des capteurs d'appuis multiples,
- ladite surface tactile comporte des capteurs de pression.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 représente de façon schématique un dispositif de commande selon l'invention,
- la figure 2a illustre un exemple d'affichage en mode rudimentaire,
- la figure 2b illustre un exemple d'affichage en mode appliqué,
- la figure 3a représente schématiquement un écran d'affichage et une surface de commande tactile du dispositif de commande,
- la figure 3b représente schématiquement l'écran d'affichage après une première commande sur la surface de commande tactile,
- la figure 3c représente schématiquement l'écran d'affichage après une deuxième commande sur la surface tactile,
- la figure 4 illustre les différentes étapes d'un procédé pour alterner automatiquement le mode de fonctionnement selon un paramètre d'état dynamique du véhicule, par exemple : la vitesse du véhicule,
- la figure 5 illustre les différentes étapes d'un procédé pour alterner automatiquement le mode de fonctionnement selon la provenance d'un geste détecté sur une surface tactile du dispositif de commande,
- la figure 6 est un tableau schématique de classement de gestes détectés sur la surface tactile par comparaison avec des critères prédéfinis, et
- la figure 7 illustre les différentes étapes d'un procédé pour alterner automatiquement le mode de fonctionnement selon la classification du geste détecté sur la surface tactile du dispositif de commande.

Dans ces figures, les éléments identiques portent les mêmes références.

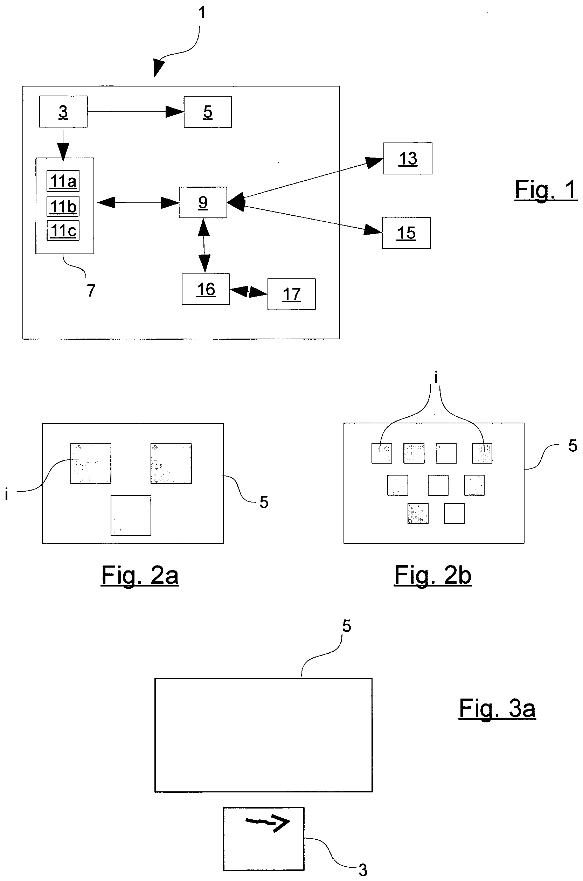

La figure 1 illustre de façon schématique un dispositif de commande 1 embarqué dans un véhicule automobile (non représenté).

Ce dispositif de commande 1 comporte une surface de commande tactile 3 sur laquelle un utilisateur peut exercer un geste de façon à commander une fonction associée, comme la commande d'un équipement électrique du véhicule automobile.

À cet effet, la surface tactile 3 comporte des capteurs permettant de détecter un geste exercé sur la surface tactile 3.

Le dispositif de commande 1 comporte en outre une unité d'affichage 5 comprenant par exemple un écran d'affichage au niveau de la console centrale ou en variante déporté sur le pare brise du véhicule, et une unité d'interprétation 7 du geste détecté pour générer la commande associée.

Afin de détecter un geste d'un utilisateur sur la surface tactile 3, la surface tactile 3 peut aussi comporter des capteurs sensibles à la pression, plus précisément utilisant des encres résistives sensibles à la pression (également connus sous le nom capteur FSR pour « Force Sensing Resistor » en anglais).

On peut prévoir également que ces capteurs sont des capteurs d'appuis multiples et simultanés.

On peut prévoir encore d'autres capteurs tels que des capteurs capacitifs ou encore des capteurs optiques.

Par ailleurs, dans cet exemple, la surface tactile 3 est représentée en étant dissociée de l'unité d'affichage 5. En alternative la surface tactile 3 est intégrée à l'écran d'affichage de l'unité d'affichage 5.

En outre, le dispositif de commande 1 comporte une unité de traitement 9 pour alterner le mode de fonctionnement du dispositif de commande 1 entre au moins deux modes de fonctionnement distincts : un mode de fonctionnement appliqué et un mode de fonctionnement rudimentaire.

Dans le mode de fonctionnement appliqué, l'utilisateur se sert du dispositif de commande 1 de façon appliquée en étant concentré et de façon précise, c'est-à-dire selon une trajectoire bien définie, ou par exemple en exerçant une pression sensiblement constante sur la surface tactile 3.

Au contraire, dans le mode de fonctionnement rudimentaire, l'utilisateur se sert du dispositif de commande 1 de façon plus rudimentaire sans être appliqué ni concentré.

On va maintenant décrire différents exemples de réalisation du mode de fonctionnement rudimentaire, à savoir proposant un affichage rudimentaire et/ou un comportement rudimentaire.

### Affichage rudimentaire

Dans ce mode de fonctionnement rudimentaire, l'affichage peut être adapté et présenter une représentation graphique de zones fonctionnelles telles que des icônes i agrandies ou plus détaillées ou encore moins d'icônes i par page de menu (figure 2a) par rapport à l'affichage du mode de fonctionnement appliqué (figure 2b). Cet affichage adapté permet à l'utilisateur de sélectionner plus facilement les icônes i sans nécessiter le même niveau de concentration que dans le mode appliqué. Cette représentation graphique n'est pas limitée aux icônes et peut s'étendre par exemple aux textes ou images ou images et texte, ou encore aux images animées.

Dans ce cas, l'unité d'affichage 5 (figure 1) est configurée pour adapter l'affichage de l'écran 5 selon le mode de fonctionnement appliqué ou rudimentaire. Plus précisément, l'unité de traitement 9 est configurée pour transmettre un signal d'adaptation de l'affichage à destination de l'unité d'affichage 5.

### Comportement rudimentaire

En variante, dans le mode de fonctionnement rudimentaire, on affiche de façon unitaire ou couplée un menu déroulant, des icônes, du texte, des images animés ou non et l'utilisateur peut exercer des gestes rudimentaires sur la surface tactile 3. On entend par geste rudimentaire, un geste non précis exercé sur la surface tactile 3 par l'utilisateur de façon grossière sans être appliqué.

Pour cela, l'unité d'interprétation 7 comporte différentes bases de données 11a à 11c d'interprétation de gestes respectivement associées aux différents modes de fonctionnement.

L'unité de traitement 9 est alors configurée pour changer la base de donnée d'interprétation 11a,11b,11c de gestes de l'unité d'interprétation 7 selon le mode de fonctionnement.

En outre, on peut prévoir pour le mode de fonctionnement rudimentaire, une base de données 11b,11c d'interprétation distincte selon que le véhicule est à l'arrêt ou en mouvement. L'unité de traitement 9 peut donc également être reliée à des capteurs de mouvement 13 du véhicule automobile tels que des capteurs au niveau du moteur du véhicule, des capteurs au niveau de la colonne de direction, des capteurs de vitesse du véhicule, ou tout autre capteur permettant de déterminer un paramêtre d'état dynamique du véhicule indiquant si le véhicule est à l'arrêt ou non.

D'autres paramètres d'état dynamique du véhicule peuvent également être considérés tel que par exemple les paramètres qui permettent de déterminer si la situation du conducteur et/ou du véhicule, parallèlement à la manipulation sur la surface tactile, est « à risque » ou non. Nous pouvons citer par exemple :
- l'assiette du véhicule,
- accélération longitudinale et transversale du véhicule
- l'angle volant et sa dynamique
- l'état de la pédale de frein ou de l'embrayage,
- l'état de la pédale d'accélération (ou dispositifs type commande sous-volant)
- l'état de l'abs
- la vitesse des roues,
- les fonctions enclenchées juste avant la manipulation sur la surface tactile (confort ou sécurité)
- l'état de somnolence du conducteur surveillé par capteurs (caméras, etc..),
- l'activation des essuies-glace ou des phares
- etc...

Dans ce cas, lorsque par exemple les capteurs de mouvement 13 du véhicule transmettent une information d'arrêt ou de mouvement du véhicule et que le mode rudimentaire est enclenché, l'unité de traitement 9 transmet un signal à l'unité d'interprétation 7 pour sélectionner une base de données llb,llc d'interprétation de gestes différente selon que le véhicule est à l'arrêt ou en mouvement.

Selon le mode de réalisation décrit, l'unité d'interprétation 7 comporte une première base de données 11a d'interprétation associée au mode de fonctionnement appliqué, une seconde base de données 11b d'interprétation associée au mode de fonctionnement rudimentaire lorsque le véhicule est à l'arrêt et une troisième base de données 11c d'interprétation associée au mode de fonctionnement rudimentaire lorsque le véhicule roule.

En conséquence, en mode de fonctionnement rudimentaire lorsque le véhicule automobile est à l'arrêt, on génère une première commande associée à un geste rudimentaire détecté sur la surface tactile 3 et lorsque le véhicule automobile est en mouvement, on génère une seconde commande associée au geste rudimentaire détecté, la seconde commande pouvant être différente de la première commande.

Par ailleurs, pour un geste rudimentaire de l'utilisateur par exemple selon une direction prédéfinie, on peut générer une commande pour afficher le menu déroulant ou encore une commande pour naviguer dans le menu déroulant avec un pas prédéterminé indépendamment de la longueur du geste rudimentaire exercé.

Un exemple de navigation dans un menu déroulant en mode de fonctionnement rudimentaire selon cette variante, est illustré par les figures 3a à 3c.

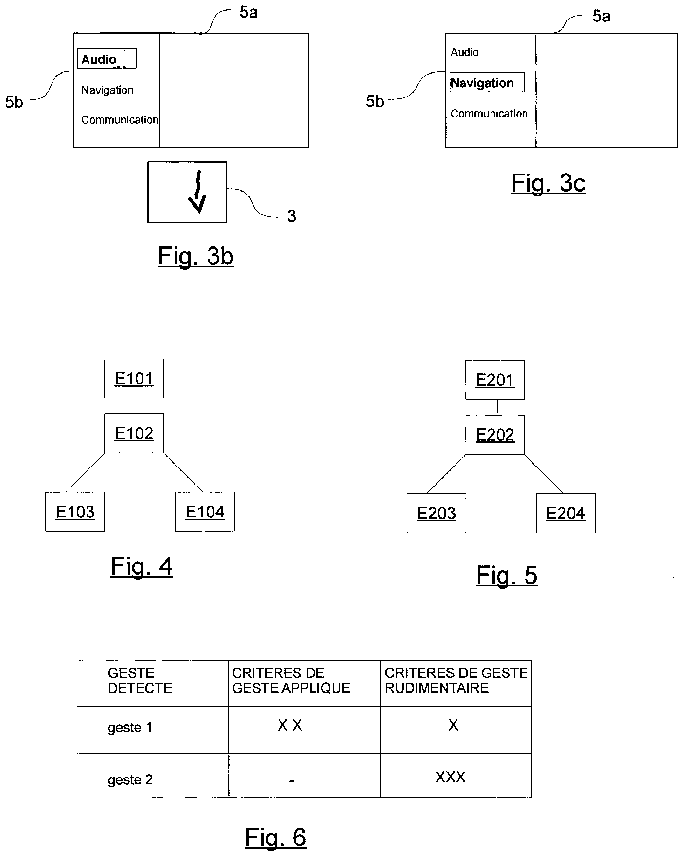

En effectuant un geste rudimentaire par exemple de gauche à droite sur la surface tactile 3 représenté par la flèche sur la figure 3a, on peut par exemple afficher un menu déroulant sur l'unité d'affichage 5 (figure 3b).

L'unité d'affichage 5 peut alors comporter un affichage principal 5a et un affichage de menu 5b qui peut par exemple apparaître en coulissant de la gauche vers la droite. Dans ce cas, l'affichage principal 5a peut être reconfiguré pour être adapté à la nouvelle taille ou encore l'affichage de menu 5b peut être partiellement transparent.

Lorsque le menu s'affiche, une fonction peut être sélectionnée par défaut, ici la fonction « Audio », pour changer la sélection on peut prévoir qu'un geste rudimentaire par exemple de haut en bas ou de bas en haut permet de naviguer dans le menu. Dans cet exemple, en effectuant un geste vers le bas tel qu'illustré par la flèche sur la figure 3b, on sélectionne la fonction suivante « Navigation » (figure 3c).

Dans cet exemple, quelle que soit la longueur de déplacement du geste selon la flèche illustrée sur la figure 3a, la commande associée générée est une commande d'affichage de menu 5b (figure 3b). De même, quelle que soit la longueur de déplacement du geste selon la flèche illustrée sur la figure 3b, la commande associée générée est une commande de sélection de la fonction suivante du menu.

Ainsi, chaque geste rudimentaire donné est associé à une commande de déplacement dans le menu déroulant d'un objet indépendamment de la longueur du geste.

On génère donc une commande associée sans tenir compte de la longueur de déplacement du geste rudimentaire exercé sur la surface tactile 3.

De plus, on peut prévoir plusieurs niveaux dans le mode de fonctionnement rudimentaire, ces niveaux étant respectivement associés à un pas prédéfini. À titre d'exemple, dans un troisième niveau du mode de fonctionnement rudimentaire, un geste rudimentaire donné est associé à une commande de déplacement dans le menu déroulant de cinq objets quelle que soit la longueur du geste.

Bien entendu les options de pas de ces différents niveaux du mode de fonctionnement rudimentaire peuvent être configurés par l'utilisateur selon ses préférences, ou peuvent différer selon le type de liste. Il pourrait être défini et/ou auto adapté par exemple en fonction de la longueur de la liste (petits pas pour petite liste, grands pas pour grande liste, moyen pas pour moyenne liste) ou son type (petits pas pour station radio , grands pas pour téléphone)

En mode de fonctionnement rudimentaire un geste de trajectoire rudimentaire de l'utilisateur sur la surface tactile selon une direction prédéfinie est donc associée indépendamment de sa longueur à une commande de sélection, par exemple d'une fonction dans un menu déroulant par déplacement selon un pas prédéterminé.

Pour la validation de l'objet sélectionné, l'utilisateur doit effectuer un geste de validation, tel que, par exemple, 'un appui d'une durée prédéfinie par exemple par un geste appliqué.

### Affichage et comportement rudimentaires

On peut également prévoir un mode de fonctionnement rudimentaire qui combine un affichage rudimentaire et un comportement rudimentaire de l'utilisateur. Notamment, un geste rudimentaire de l'utilisateur par exemple selon une direction donnée peut permettre de balayer les grandes icônes de l'affichage rudimentaire.

Dans la suite de la description, on décrit deux façons manuelle et automatique pour alterner les modes de fonctionnements appliqué et rudimentaire du dispositif de commande 1.

### Alternance manuelle des modes de fonctionnement

En se référant à nouveau à la figure 1, pour alterner le mode de fonctionnement du dispositif de commande 1 pour passer du mode de fonctionnement appliqué au mode de fonctionnement rudimentaire et inversement, en transmettant un signal à l'unité d'affichage 5 pour adapter l'affichage et/ou en transmettant un signal à l'unité d'interprétation 7 pour sélectionner une base de données d'interprétation 11a,11b,11c appropriée, l'unité de traitement 9 peut comporter un moyen de sélection manuelle (non représenté) sur lequel appuie l'utilisateur selon un premier mode de réalisation.

On peut prévoir un unique moyen de sélection qui permet d'alterner le mode de fonctionnement ou encore plusieurs moyens de sélection respectivement associés à un mode de fonctionnement pour l'enclencher.

Bien entendu, ce moyen de sélection peut être un bouton physique du dispositif de commande 1 ou encore une zone tactile associée de la surface tactile 3.

Lorsque l'utilisateur appuie sur un moyen de sélection, l'unité de traitement 9 reçoit alors un paramètre d'entrée d'activation du moyen de sélection pour alterner le mode de fonctionnement.

### Alternance automatique des modes de fonctionnement

En alternative par rapport au premier mode de réalisation, le changement de mode de fonctionnement se fait de façon automatique, c'est à dire sans l'intervention de l'utilisateur.

Cette alternance automatique peut se faire suivants différents paramètres d'entrée, tels que :
- la vitesse du véhicule,
- l'auteur d'un geste détecté sur la surface tactile 3, à savoir le conducteur ou un passager,
- la classification d'un geste détecté sur la surface tactile 3 en tant que geste appliqué ou rudimentaire.

On va maintenant présenter ces différents cas de figure.

### Alternance automatique des modes de fonctionnement selon la vitesse du véhicule

Selon un second mode de réalisation, l'alternance automatique se fait en fonction de la vitesse du véhicule.

À cet effet, l'unité de traitement 9 comporte une entrée reliée à un module de comparaison 15 comprenant des capteurs de vitesse du véhicule tel qu'un capteur de roues d'un système anti-blocage de roues « A.B.S » pour l'allemand « AntiBlockierSystem » ou tout autre capteur de vitesse du véhicule et un comparateur de la vitesse mesurée par les capteurs de vitesse avec un seuil de vitesse prédéterminé.

Le module de comparaison 15 comporte encore au moins un moyen de traitement pour transmettre les résultats de comparaison sous forme de paramètre d'entrée à l'unité de traitement 9. Cette unité de traitement 9 est configurée pour alterner le mode de fonctionnement selon ces résultats de comparaison, à savoir : lorsque la vitesse mesurée est inférieure au seuil de vitesse prédéterminé, enclencher le mode appliqué si on est en mode rudimentaire, et ne rien faire si on est déjà en mode appliqué; et au contraire, lorsque la vitesse mesurée est supérieure au seuil de vitesse prédéterminé, enclencher le mode rudimentaire si on est en mode appliqué, et ne rien faire si on est déjà en mode rudimentaire.

Ainsi en se référant à la figure 4, à l'étape E101 les capteurs de vitesse mesurent la vitesse du véhicule et transmettent une information de vitesse au comparateur pour une comparaison à l'étape E102 de la vitesse mesurée avec le seuil de vitesse prédéterminé. Si la vitesse mesurée est inférieure au seuil de vitesse prédéterminé, on passe en mode appliqué à l'étape E103 et sinon on passe en mode rudimentaire à l'étape E104.

Des paramètres d'état dynamique du véhicule autres que celui de la vitesse du véhicule auraient pu ici être aussi envisagés à titre d'exemple.

### Alternance automatique des modes de fonctionnement selon l'auteur du geste détecté

Un troisième mode de réalisation diffère du second mode de réalisation par le fait que le mode de fonctionnement est alterné de façon automatique selon l'auteur d'un geste détecté sur la surface tactile 3.

On peut prévoir par exemple que lorsque le geste détecté est exercé par le conducteur on passe automatiquement en mode de fonctionnement rudimentaire.

Bien entendu, on peut également prévoir d'enclencher le mode de fonctionnement appliqué lorsque le geste est exercé par un passager.

Pour ce faire, l'unité de traitement 9 (figure 1) comporte une entrée reliée à un moyen de détermination pour déterminer si le geste détecté est exercé par le conducteur ou par un passager, tel qu'un capteur optique. On peut aussi placer un capteur de poids au niveau du siège passager, si ce capteur de poids transmet une information relative à l'absence d'un passager sur le siège, on considère que le geste détecté a été exercé par le conducteur.

Ainsi, lorsqu'un geste exercé par l'utilisateur sur la surface tactile 3 est détecté à l'étape E201 (figure 5), on s'interroge sur la provenance du geste détecté à l'étape E202. Par exemple, on vérifie si des signaux sont reçus des capteurs optiques ou de poids au niveau du siège passager et on analyse ces signaux afin de déterminer la provenance du geste détecté. Si le geste détecté est un geste exercé par le conducteur on passe en mode rudimentaire à l'étape E203. Au contraire, si le geste détecté est exercé par un passager on peut passer en mode appliqué à l'étape E204.

### Alternance automatique des modes de fonctionnement selon la classification du geste détecté

Selon encore un quatrième mode de réalisation, on change automatiquement de mode de fonctionnement selon la classification du geste, appliqué ou rudimentaire, détecté sur la surface tactile 3 (figure 1).

Plus précisément, on passe automatiquement au mode de fonctionnement rudimentaire si un geste rudimentaire est détecté et au mode de fonctionnement appliqué si un geste appliqué est détecté.

À cet effet, le dispositif de commande 1 comporte un module de classification 16 pour analyser le geste détecté à l'aide d'une pluralité de critères enregistrés respectivement associés à un geste appliqué et/ à un geste rudimentaire.

Ces critères d'analyse sont par exemple enregistrés dans une mémoire 17 du dispositif de commande 1.

On peut citer en exemple de critères enregistrés associés à un geste appliqué : un critère d'appui unique exercé sur la surface tactile 3, un critère de constance de pression exercée sur la surface tactile 3, un critère multi-directionnel du geste exercé sur la surface tactile 3, ou encore un critère d'accélération du geste exercé sur la surface tactile inférieure à un seuil d'accélération prédéfini.

De même, on peut citer comme exemple de critères enregistrés associés à un geste rudimentaire : un critère de non constance de pression exercée sur la surface tactile 3, un critère d'accélération du geste exercé sur la surface tactile 3 supérieure au seuil d'accélération prédéfini, un critère d'appuis multiples exercés sur la surface tactile 3 selon une direction commune.

Bien entendu, tout autre critère permettant de distinguer un geste appliqué d'un geste rudimentaire peut être envisagé.

Le module de classification 16 peut également comporter un calculateur pour calculer d'une part le nombre de critères enregistrés associés à un geste appliqué et d'autre part le nombre de critères enregistrés associés à un geste rudimentaire auxquels répond le geste détecté.

Par exemple, si le geste détecté répond à une majorité de critères enregistrés associés à un geste appliqué, le module de classification 16 classe le geste détecté comme un geste appliqué.

Au contraire, le module de classification 16 classe le geste détecté comme un geste rudimentaire par exemple si le geste détecté répond à autant de critères enregistrés associés à un geste appliqué que de critères enregistrés associés à un geste rudimentaire, ou encore si le geste détecté répond à une majorité de critères enregistrés associés à un geste rudimentaire.

En se référant à la figure 6, prenons pour exemple un premier geste « geste 1 » présentant les caractéristiques suivantes :
- appuis multiples selon une direction commune,
- pression constante,
- accélération inférieure au seuil prédéfini.

On comptabilise deux critères de geste appliqué que sont les critères : pression constante, accélération inférieure au seuil prédéfini, et un critère de geste rudimentaire : appuis multiples selon une direction commune. En tout, on compte deux critères de geste appliqué contre un critère de geste rudimentaire.

Il y a une majorité de critères de geste appliqué pour le geste 1 qui est donc classé en tant que geste appliqué.

De façon similaire, prenons l'exemple d'un deuxième geste « geste 2 » présentant les caractéristiques suivantes :
- appuis multiples selon une direction commune,
- pression non constante,
- accélération supérieure au seuil prédéfini.

Ainsi, on comptabilise trois critères de gestes rudimentaires. Il n'y a que des critères de geste rudimentaire pour le geste 2 qui est donc classé en tant que geste rudimentaire.

On peut donc différencier de façon simple un geste appliqué de l'utilisateur d'un geste rudimentaire, de façon à passer en mode rudimentaire permettant à l'utilisateur d'utiliser le dispositif de commande 1 sans nécessiter une grande concentration de l'utilisateur en particulier si ce dernier est en train de conduire, augmentant alors la sécurité.

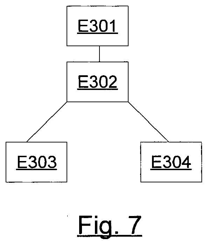

Ainsi, en se référant à la figure 7, on détecte lors d'une première étape E301 un geste exercé sur la surface tactile 3.

On analyse ensuite à l'étape E302 le geste détecté à l'aide des critères enregistrés par exemple dans la mémoire 17, et en fonction des résultats d'analyse on détermine si le geste détecté est un geste appliqué ou un geste rudimentaire.

Si le geste détecté est un geste appliqué, on passe en mode de fonctionnement appliqué à l'étape E303 si on est en mode de fonctionnement rudimentaire et on reste en mode de fonctionnement appliqué si on est déjà en mode de fonctionnement appliqué.

Inversement, si le geste détecté est un geste rudimentaire, on passe en mode de fonctionnement rudimentaire à l'étape E304 si on est en mode de fonctionnement appliqué et on reste en mode de fonctionnement rudimentaire si on est déjà en mode de fonctionnement rudimentaire.

On comprend donc qu'un tel dispositif de commande 1 permet d'alterner de façon simple le mode de fonctionnement entre un mode de fonctionnement appliqué et un mode de fonctionnement rudimentaire, permettant une utilisation du dispositif de commande plus appropriée à la conduite sans nuire à la sécurité du conducteur et à celle des autres.

## Revendications

1. Dispositif de commande pour véhicule automobile, comprenant une surface tactile de commande (3) configurée pour détecter un geste d'un utilisateur exercé sur ladite surface tactile (3), et une unité d'interprétation (7) dudit geste détecté pour générer une commande associée audit geste détecté, **caractérisé en ce que** :
• ledit dispositif de commande comporte au moins une unité de traitement (9) configurée pour alterner le mode de fonctionnement dudit dispositif de commande entre un mode de fonctionnement appliqué, et un mode de fonctionnement rudimentaire, en fonction d'au moins un paramètre d'entrée pour alterner le mode de fonctionnement, et **en ce que**
• l'unité d'interprétation (7) est configurée pour changer la base de données d'interprétation (11a,11b,11c) de gestes de l'unité d'interprétation selon le mode de fonctionnement appliqué ou rudimentaire.

2. Dispositif de commande selon la revendication 1, comprenant une unité d'affichage (5), **caractérisé en ce que** l'unité d'affichage (5) est configurée pour adapter l'affichage selon le mode de fonctionnement appliqué ou rudimentaire.

3. Dispositif de commande selon la revendication 2, **caractérisé en ce que** l'affichage du mode de fonctionnement rudimentaire comporte une représentation graphique de zones fonctionnelles (i) agrandies par rapport à l'affichage du mode de fonctionnement appliqué.

4. Dispositif de commande selon l'une des revendications 2 ou 3, **caractérisé en ce que** l'unité d'affichage (5) comporte un écran d'affichage et **en ce que** ladite surface tactile (3) est intégrée à l'écran d'affichage.

5. Dispositif de commande selon l'une des revendications 2 ou 3, **caractérisé en ce que** ladite surface tactile (3) est dissociée de l'unité d'affichage (5).

6. Dispositif de commande selon l'une quelconque des revendications précédentes, **caractérisé en ce qu'**en mode de fonctionnement rudimentaire, un geste de trajectoire est associé à une commande de sélection indépendamment de la longueur de déplacement du geste sur ladite surface tactile (3).

7. Dispositif de commande selon la revendication 6, **caractérisé en ce que** la commande de sélection est une commande de déplacement dans un menu déroulant avec un pas prédéterminé.

8. Dispositif de commande selon l'une quelconque des revendications précédentes, **caractérisé en ce qu'**en mode de fonctionnement rudimentaire, un geste d'appui exercé sur ladite surface tactile (3) selon une durée prédéfinie est associé à une commande de validation.

9. Dispositif de commande selon l'une quelconque des revendications précédentes, **caractérisé en ce que** ledit dispositif de commande comporte au moins un moyen de sélection manuelle pour alterner le mode de fonctionnement dudit dispositif de commande, dont l'activation génère un paramètre d'entrée de l'unité de traitement (9) pour alterner le mode de fonctionnement.

10. Dispositif de commande selon l'une quelconque des revendications précédentes, **caractérisé en ce que** le paramètre d'entrée pour alterner le mode de fonctionnement est choisi parmi le groupe comprenant un paramètre d'état dynamique du véhicule, un paramètre de classification du geste exercé sur ladite surface tactile en tant que geste appliqué ou geste rudimentaire, un paramètre sur l'utilisateur dudit dispositif de commande.

11. Dispositif de commande selon la revendication 10, **caractérisé en ce que** l'unité de traitement (9) est configurée pour enclencher le mode de fonctionnement rudimentaire lorsque, le paramètre d'état dynamique du véhicule étant la vitesse détectée, ladite vitesse est supérieure à un seuil de vitesse prédéfini, et pour enclencher le mode de fonctionnement appliqué lorsque la vitesse détectée est inférieure audit seuil.

12. Dispositif de commande selon la revendication 10, **caractérisé en ce que** l'unité de traitement (9) est configurée pour enclencher le mode de fonctionnement rudimentaire, si un geste détecté sur ladite surface tactile (3) est exercé par le conducteur.

13. Dispositif de commande selon la revendication 10, **caractérisé en ce que** l'unité de traitement (9) est configurée pour enclencher le mode de fonctionnement appliqué, si un geste détecté sur ladite surface tactile (3) est classé comme un geste appliqué, et pour enclencher le mode de fonctionnement rudimentaire, si ledit geste détecté est classé comme un geste rudimentaire.

14. Dispositif de commande selon la revendication 13, **caractérisé en ce qu'**il comporte un module de classification (16) relié à une entrée de l'unité de traitement (9) et configuré pour comparer un geste détecté sur ladite surface tactile (3) avec une pluralité de critères enregistrés respectivement associés à un geste appliqué et/ou à un geste rudimentaire, et pour classer ledit geste détecté comme un geste appliqué ou comme un geste rudimentaire selon les résultats de comparaison.

15. Dispositif de commande selon la revendication 14, **caractérisé en ce qu'**au moins un critère enregistré associé à un geste appliqué est choisi parmi les critères suivants : un critère d'appui unique exercé sur ladite surface tactile, un critère de constance de pression exercée sur ladite surface tactile, un critère multi-directionnel du geste exercé sur ladite surface tactile, un critère d'accélération du geste exercé sur ladite surface tactile inférieure à un seuil d'accélération prédéfini.

16. Dispositif de commande selon l'une des revendications 14 ou 15, **caractérisé en ce qu'**au moins un critère enregistré associé à un geste rudimentaire est choisi parmi les critères suivants : un critère d'appuis multiples exercés sur ladite surface tactile selon un sens unique, un critère de non-constance de pression exercée sur ladite surface tactile, un critère d'accélération du geste exercé sur ladite surface tactile supérieure à un seuil d'accélération prédéfini.

17. Dispositif de commande selon l'une quelconque des revendications précédentes, **caractérisé en ce que** ladite surface tactile (3) comporte des capteurs d'appuis multiples.

18. Dispositif de commande selon l'une quelconque des revendications précédentes, **caractérisé en ce que** ladite surface tactile (3) comporte des capteurs de pression.

## Patentansprüche

1. Steuervorrichtung für ein Kraftfahrzeug, die eine berührungsempfindliche Steuerfläche (3), die konfiguriert ist, eine Geste eines Benutzers zu erfassen, die auf die berührungsempfindliche Fläche (3) ausgeübt wird, und eine Interpretationseinheit (7) der erfassten Geste enthält, um einen der erfassten Geste zugeordneten Befehl zu generieren, **dadurch gekennzeichnet, dass**:
- die Steuervorrichtung mindestens eine Verarbeitungseinheit (9) aufweist, die konfiguriert ist, die Betriebsart der Steuervorrichtung zwischen einer angewandten Betriebsart und einer rudimentären Betriebsart abhängig von mindestens einem Eingangsparameter zum Wechseln der Betriebsart zu wechseln, und dass
- die Interpretationseinheit (7) konfiguriert ist, die Interpretationsdatenbank (11a, 11b, 11c) von Gesten der Interpretationseinheit gemäß der angewandten oder rudimentären Betriebsart zu ändern.

2. Steuervorrichtung nach Anspruch 1, die eine Anzeigeeinheit (5) enthält, **dadurch gekennzeichnet, dass** die Anzeigeeinheit (5) konfiguriert ist, die Anzeige gemäß der angewandten oder rudimentären Betriebsart anzupassen.

3. Steuervorrichtung nach Anspruch 2, **dadurch gekennzeichnet, dass** die Anzeige der rudimentären Betriebsart eine grafische Darstellung von Funktionszonen (i) aufweist, die bezüglich der Anzeige der angewandten Betriebsart vergrößert sind.

4. Steuervorrichtung nach einem der Ansprüche 2 oder 3, **dadurch gekennzeichnet, dass** die Anzeigeeinheit (5) einen Anzeigebildschirm aufweist, und dass die berührungsempfindliche Fläche (3) in den Anzeigebildschirm integriert ist.

5. Steuervorrichtung nach einem der Ansprüche 2 oder 3, **dadurch gekennzeichnet, dass** die berührungsempfindliche Fläche (3) von der Anzeigeeinheit (5) getrennt ist.

6. Steuervorrichtung nach einem der vorhergehenden Ansprüche, **dadurch gekennzeichnet, dass** in der rudimentären Betriebsart eine Bahn-Geste einem Auswahlbefehl unabhängig von der Verschiebungslänge der Geste auf der berührungsempfindlichen Fläche (3) zugeordnet ist.

7. Steuervorrichtung nach Anspruch 6, **dadurch gekennzeichnet, dass** der Auswahlbefehl ein Verschiebebefehl in einem Drop-Down-Menü mit einem vorbestimmten Schritt ist.

8. Steuervorrichtung nach einem der vorhergehenden Ansprüche, **dadurch gekennzeichnet, dass** in der rudimentären Betriebsart eine auf die berührungsempfindliche Fläche (3) gemäß einer vordefinierten Dauer ausgeübte Auflagegeste einem Validierungsbefehl zugeordnet ist.

9. Steuervorrichtung nach einem der vorhergehenden Ansprüche, **dadurch gekennzeichnet, dass** die Steuervorrichtung mindestens eine Einrichtung zur manuellen Auswahl aufweist, um die Betriebsart der Steuervorrichtung zu wechseln, deren Aktivierung einen Eingangsparameter der Verarbeitungseinheit (9) generiert, um die Betriebsart zu wechseln.

10. Steuervorrichtung nach einem der vorhergehenden Ansprüche, **dadurch gekennzeichnet, dass** der Eingangsparameter zum Wechseln der Betriebsart ausgewählt wird aus der Gruppe, die einen dynamischen Zustandsparameter des Fahrzeugs, einen Klassifizierungsparameter der auf die berührungsempfindliche Fläche ausgeübten Geste als angewandte oder rudimentäre Geste, einen Parameter über den Benutzer der Steuervorrichtung enthält.

11. Steuervorrichtung nach Anspruch 10, **dadurch gekennzeichnet, dass** die Verarbeitungseinheit (9) konfiguriert ist, die rudimentäre Betriebsart einzuschalten, wenn, während der dynamische Zustandsparameter des Fahrzeugs die erfasste Geschwindigkeit ist, die Geschwindigkeit höher ist als eine vordefinierte Geschwindigkeitsschwelle, und die angewandte Betriebsart einzuschalten, wenn die erfasste Geschwindigkeit niedriger als die Schwelle ist.

12. Steuervorrichtung nach Anspruch 10, **dadurch gekennzeichnet, dass** die Verarbeitungseinheit (9) konfiguriert ist, die rudimentäre Betriebsart einzuschalten, wenn eine erfasste Geste auf der berührungsempfindlichen Fläche (3) vom Fahrer ausgeübt wird.

13. Steuervorrichtung nach Anspruch 10, **dadurch gekennzeichnet, dass** die Verarbeitungseinheit (9) konfiguriert ist, die angewandte Betriebsart einzuschalten, wenn eine erfasste Geste auf der berührungsempfindlichen Fläche (3) als eine angewandte Geste klassifiziert wird, und die rudimentäre Betriebsart einzuschalten, wenn die erfasste Geste als eine rudimentäre Geste klassifiziert wird.

14. Steuervorrichtung nach Anspruch 13, **dadurch gekennzeichnet, dass** sie ein Klassifizierungsmodul (16) aufweist, das mit einem Eingang der Verarbeitungseinheit (9) verbunden und konfiguriert ist, eine erfasste Geste auf der berührungsempfindlichen Fläche (3) mit einer Vielzahl von gespeicherten Kriterien zu vergleichen, die je einer angewandten Geste und/oder einer rudimentären Geste zugeordnet sind, und die erfasste Geste je nach den Vergleichsergebnissen als eine angewandte Geste oder als eine rudimentäre Geste zu klassifizieren.

15. Steuervorrichtung nach Anspruch 14, **dadurch gekennzeichnet, dass** mindestens ein einer angewandten Geste zugeordnetes gespeichertes Kriterium aus den folgenden Kriterien ausgewählt wird: ein Kriterium einer einzigen auf die berührungsempfindliche Fläche ausgeübten Auflage, ein Kriterium der Konstanz des auf die berührungsempfindliche Fläche ausgeübten Drucks, ein multidirektionales Kriterium der auf die berührungsempfindliche Fläche ausgeübten Geste, ein Kriterium der Beschleunigung der auf die berührungsempfindliche Fläche ausgeübten Geste niedriger als eine vordefinierte Beschleunigungsschwelle.

16. Steuervorrichtung nach einem der Ansprüche 14 oder 15, **dadurch gekennzeichnet, dass** mindestens ein einer rudimentären Geste zugeordnetes gespeichertes Kriterium aus den folgenden Kriterien ausgewählt wird: ein Kriterium einer Vielzahl von Auflagen, die auf die berührungsempfindliche Fläche gemäß einer einzigen Richtung ausgeübt werden, ein Kriterium der Nicht-Konstanz des auf die berührungsempfindliche Fläche ausgeübten Drucks, ein Kriterium der Beschleunigung der auf die berührungsempfindliche Fläche ausgeübten Geste höher als eine vordefinierte Beschleunigungsschwelle.

17. Steuervorrichtung nach einem der vorhergehenden Ansprüche, **dadurch gekennzeichnet, dass** die berührungsempfindliche Fläche (3) eine Vielzahl von Auflagesensoren aufweist.

18. Steuervorrichtung nach einem der vorhergehenden Ansprüche, **dadurch gekennzeichnet, dass** die berührungsempfindliche Fläche (3) Drucksensoren aufweist.

## Claims

1. Control device for an automobile, comprising a touch-sensitive control surface (3) configured to detect a gesture of a user exerted on said touch-sensitive surface (3), and a unit (7) for interpreting said detected gesture to generate a command associated with said detected gesture, **characterized in that**:
· said control device comprises at least one processing unit (9) configured to alternate the operating mode of said control device between an applied operating mode and a basic operating mode, based on at least one input parameter for alternating the operating mode, and **in that**
· the interpretation unit (7) is configured to change the gesture interpretation database (11a, 11b, 11c) of the interpretation unit according to the applied or basic operating mode.

2. Control device according to Claim 1, comprising a display unit (5), **characterized in that** the display unit (5) is configured to adapt the display according to the applied or basic operating mode.

3. Control device according to Claim 2, **characterized in that** the display of the basic operating mode comprises a graphic representation of functional areas (i) that are enlarged relative to the display of the applied operating mode.

4. Control device according to either of Claims 2 and 3, **characterized in that** the display unit (5) comprises a display screen and **in that** said touch-sensitive surface (3) is integrated in the display screen.

5. Control device according to either of Claims 2 and 3, **characterized in that** said touch-sensitive surface (3) is separate from the display unit (5).

6. Control device according to any one of the preceding claims, **characterized in that**, in the basic operating mode, a trajectory gesture is associated with a selection command independently of the length of displacement of the gesture on said touch-sensitive surface (3).

7. Control device according to Claim 6, **characterized in that** the selection command is a displacement command in a pop-up menu with a predetermined pitch.

8. Control device according to any one of the preceding claims, **characterized in that**, in the basic operating mode, a gesture of pressure exerted on said touch-sensitive surface (3) according to a predefined duration is associated with a validation command.

9. Control device according to any one of the preceding claims, **characterized in that** said control device comprises at least one manual selection means for alternating the operating mode of said control device, the activation of which generates an input parameter for the processing unit (9) to alternate the operating mode.

10. Control device according to any one of the preceding claims, **characterized in that** the input parameter for alternating the operating mode is chosen from the group comprising a dynamic status parameter of the vehicle, a parameter for classifying the gesture exerted on said touch-sensitive surface as applied gesture or basic gesture, a parameter on the user of said control device.

11. Control device according to Claim 10, **characterized in that** the processing unit (9) is configured to engage the basic operating mode when, the dynamic status parameter of the vehicle being the detected speed, said speed is above a predefined speed threshold, and to engage the applied operating mode when the detected speed is below said threshold.

12. Control device according to Claim 10, **characterized in that** the processing unit (9) is configured to engage the basic operating mode if a gesture detected on said touch-sensitive surface (3) is exerted by the driver.

13. Control device according to Claim 10, **characterized in that** the processing unit (9) is configured to engage the applied operating mode if a gesture detected on said touch-sensitive surface (3) is classified as an applied gesture, and to engage the basic operating mode if said detected gesture is classified as a basic gesture.

14. Control device according to Claim 13, **characterized in that** it comprises a classification module (16) linked to an input of the processing unit (9) and configured to compare a gesture detected on said touch-sensitive surface (3) with a plurality of stored criteria respectively associated with an applied gesture and/or with a basic gesture, and to classify said detected gesture as an applied gesture or as a basic gesture depending on the comparison results.

15. Control device according to Claim 14, **characterized in that** at least one stored criterion associated with an applied gesture is chosen from the following criteria: a criterion of single pressure exerted on said touch-sensitive surface, a criterion of constancy of pressure exerted on said touch-sensitive surface, a multidirectional criterion of the gesture exerted on said touch-sensitive surface, a criterion of acceleration of the gesture exerted on said touch-sensitive surface below a predefined acceleration threshold.

16. Control device according to either of Claims 14 and 15, **characterized in that** at least one stored criterion associated with a basic gesture is chosen from the following criteria: a criterion of multiple pressures exerted on said touch-sensitive surface in a single direction, a criterion of non-constancy of pressure exerted on said touch-sensitive surface, a criterion of acceleration of the gesture exerted on said touch-sensitive surface above a predefined acceleration threshold.

17. Control device according to any one of the preceding claims, **characterized in that** said touch-sensitive surface (3) includes sensors sensing multiple pressures.

18. Control device according to any one of the preceding claims, **characterized in that** said touch-sensitive surface (3) includes pressure sensors.
